# EUROPEAN PATENT APPLICATION

(11) **EP 2 252 010 A1**
(43) Date of publication of application: **17.11.2010**
(21) Application number: 08873521.2
(22) Date of filing: 09.12.2008
(51) Int. Cl.: H04L 12/54

(54) **METHOD, APPARATUS, AND SYSTEM FOR CATEGORIZING CONTENT**

(30) Priority: 25.03.2008 CN 200810102678
(71) Applicant: Huawei Technologies Co., Ltd., Longgang District, Shenzhen Guangdong 518129 (CN)
(72) Inventor: LIU, Yiling, Shenzhen Guangdong 518129 (CN); JOHAN, Zuidweg, Shenzhen Guangdong 518129 (CN)
(74) Representative: Körber, Martin Hans
(86) International application number: PCT/CN2008/073400
(87) International publication number: WO 2009/117889

(57) **Abstract**

A method, device, and system for categorizing content are provided. The method for categorizing content includes the following steps. A content categorization request is received, in which the content categorization request carries a first content reference and a second content reference. The content is categorized according to the first content reference and/or the second content reference. A method for categorizing content is further provided, which includes the following steps. Content categorization method information is sent to a content categorization requester. A content categorization request determined by the content categorization requester according to the content categorization method information is received. The content to be categorized is categorized according to the content categorization request. A device and system for categorizing content are further provided. A content category can be obtained with multiple content references, and a content categorization requester can fully know categorizing ability of the content categorization provider, thereby determining the content categorization request.

## Description

### FIELD OF THE TECHNOLOGY

The present disclosure relates to the field of content categorization technology, and more particularly to a method, device and system for categorizing content.

### BACKGROUND OF THE INVENTION

With the development of information technologies, screening of communication content becomes more and more important. Currently, content screening technologies include a list screening technology, a key word screening technology, a template screening technology, a categorization screening technology. A Categorization Based Content Screening (CBCS) technology becomes a research hotspot due to its flexibility and wide applicability.

In the prior art, a procedure for obtaining a content category through content in a CBCS system includes the following steps: A content categorization requester sends a content categorization request to a content categorization provider, where the content carried in the content categorization request may be in a form of content itself or a content reference ; and the content categorization provider categorizes content according to the received content categorization request.

In the process of implementing the present disclosure, the inventor finds the following problem in the prior art: The content categorization requester can request a content category with only one content reference. When there are multiple content references in a content, a categorization can be requested with only each content reference, which is quite time-consuming.

### SUMMARY OF THE INVENTION

Accordingly, on one aspect, in order to solve the problem that in the prior art, a content categorization requester is only supported to request a content category with one content reference with low efficiency, the present disclosure is directed to a method and device for categorizing content, which can obtain a categorization of a content having multiple content references, and therefore increasing the efficiency of categorizing content.

In an embodiment, the present disclosure provides a method for categorizing content. The method includes the following steps:
A method for categorizing content includes: receiving a content categorization request, wherein the content categorization request carries a first content reference and a second content reference; and categorizing the content according to the first content reference and/or the second content reference.

In an embodiment, the present disclosure further provides a device for categorizing content. A device for categorizing content includes: a unit for receiving a content categorization request, configured to receive a content categorization request sent by a content categorization requester, wherein the content categorization request carries a first content reference and a second content reference; and a content categorization unit, configured to determine a content category according to the first content reference and/or the second content reference..

The method and device of the embodiments of the present disclosure on one aspect can determine a categorization of a content having multiple content references, and increase the efficiency of content categorization.

On the other aspect, the present disclosure is directed to a method, device and system for categorizing content, which can make a content categorization requester know a content categorization method of a content categorization provider, and can make the content categorization provider categorize a content based on a method required by the content categorization requester.

In an embodiment, the present disclosure provides a method for categorizing content. The method includes the following steps:
A method for categorizing content includes: sending content categorization method information to a content categorization requester; receiving a content categorization request determined by the content categorization requester according to the content categorization method information; and categorizing a content to be categorized according to the content categorization request.

In an embodiment, the present disclosure further provides a method for requesting content categorization. The method includes the following steps:
A method for requesting content categorization includes: receiving content categorization method information sent by a content categorization provider; determining a content categorization request according to the content categorization method information; and sending the content categorization request to the content categorization provider..

In an embodiment, the present disclosure further provides a device for categorizing content. A device for categorizing content includes: a unit for sending content categorization method information, configured to send content categorization method information to a content categorization requester; a unit for receiving a content categorization request, configured to receive a content categorization request determined according to the content categorization method information sent by the content categorization requester; and a content categorization unit, configured to determine a content category according to the content categorization request.

In an embodiment, the present disclosure further provides a device for requesting content categorization. A device for requesting content categorization includes: a unit for receiving content categorization method information, configured to receive content categorization method information sent by a content categorization provider; a unit for determining a content categorization request, configured to determine a content categorization request according to the content categorization method information; and a content categorization request sending unit, configured to send the content categorization request determined by the unit for determining a content categorization request to the content categorization provider.

In an embodiment, the present disclosure further provides a system for categorizing content. A system for categorizing content includes: a device for categorizing content, comprising: a unit for sending content categorization method information, configured to send a content categorization method message to a content categorization requester; a unit for receiving a content categorization request, configured to receive a content categorization request determined according to the content categorization method information sent by the content categorization requester; and a content categorization unit, configured to determine a content category according to the content categorization request; and a device for requesting content categorization, comprising: a unit for receiving content categorization method information, configured to receive the content categorization method information sent by a content categorization provider; a unit for determining a content categorization request, configured to determine the content categorization request according to the content categorization method information; and a content categorization request sending unit, configured to send the content categorization request determined by the unit for determining a content categorization request to the content categorization provider.

By using the method, device and system of the embodiments of the present disclosure on the other aspect, information about a categorization method of a content categorization provider is sent to a content categorization requester through the content categorization provider, so that the content categorization requester can know the categorization method of the content categorization provider. In addition, the content categorization requester can determine a preferable manner to obtain the content category by analyzing content categorization method information of the content categorization provider, and connecting with characters of the content to be categorized, its own processing capability, or a received content categorization result, and the content categorization requester can require the content categorization provider to categorize the content in term of this manner by carrying content categorization method requirement information in a content categorization request. Therefore, the content categorization provider categorizes the content high-efficiently and quickly in a method which is effective and suitable to the content categorization provider.

### BRIEF DESCRIPTION OF THE DRAWINGS

FIG. 1 is a flow chart of a method of a first embodiment of the present disclosure;
FIG. 2 is a schematic diagram of a CBCS framework structure in a method of an embodiment of the present disclosure;
FIG. 3 is a flow chart of a method of a second embodiment of the present disclosure;
FIG. 4 is a flow chart of a method of a third embodiment of the present disclosure;
FIG. 5 is a flow chart of a method for requesting content categorization according to a fourth embodiment of the present disclosure;
FIG. 6 is a flow chart of a method of a fifth embodiment of the present disclosure;
FIG. 7 is a flow chart of a method of a sixth embodiment of the present disclosure;
FIG. 8 is a flow chart of a method of a seventh embodiment of the present disclosure;
FIG. 9 is a schematic diagram of a device of a first embodiment of the present disclosure;
FIG. 10 is a schematic diagram of a device of a second embodiment of the present disclosure;
FIG. 11 is a schematic diagram of a device for requesting content categorization according to an embodiment of the present disclosure; and
FIG. 12 is a schematic diagram of a system of an embodiment of the present disclosure.

### DETAILED DESCRIPTION OF THE EMBODIMENTS

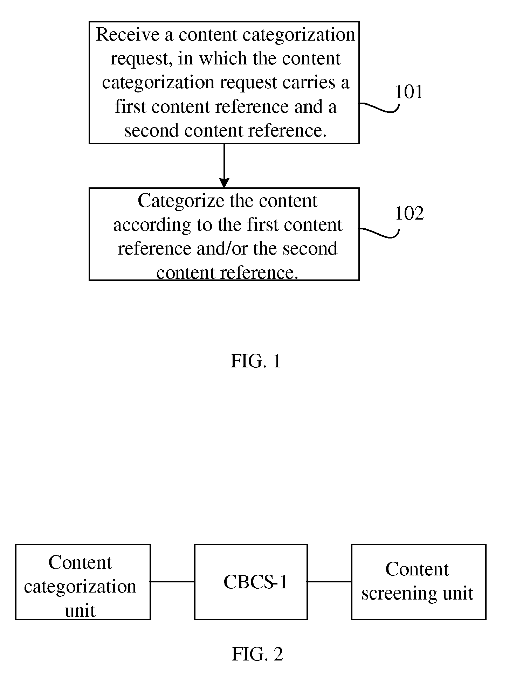

FIG. 1 is a flow chart of a method of a first embodiment of the present disclosure. As shown in FIG. 1, the method includes the following steps:
Step 101: Receive a content categorization request. The content categorization request carries a first content reference and a second content reference.
Step 102: Categorize content according to the first content reference and/or the second content reference.

The first embodiment can be specifically applied to a content categorization unit of CBCS of the Open Mobile Alliance. FIG. 2 is a schematic diagram of a CBCS framework structure in a method of an embodiment of the present disclosure. As shown in FIG. 2, The CBCS framework structure includes a content categorization unit and a content screening unit, A CBCS-1 is an interface between the content categorization unit and the content screening unit. The first embodiment can be used to categorize content according to a content categorization request, where the request carries multiple content references and is received through the CBCS-1 interface.

The content requesting content categorization according to the embodiment of the present disclosure is in a form of multiple content references. By obtaining the multiple content references in a content request by parsing the content request, the content is categorized according to the multiple content references, thus avoiding the need of requesting the content categorization according to each content reference. In this way, time for obtaining the content categorization is saved, and the efficiency is enhanced.

A content categorization request sent by a content categorization requester to a content categorization provider carries multiple content references, and the multiple content references can be any combination of a content locator, a content identifier, and a content abstract. If one content categorization request can carry multiple contents simultaneously, a relation between the multiple content references and the contents needs to be demonstrated in the content categorization request. As shown in the following Extensible Markup Language (XML), the XML illustrates a relation between a content and a content reference in a form of paired <content>/<content> identifiers. It can be seen from the following XML that, a first content corresponds to three content references, a second content corresponds to two content references, and a third content corresponds to one content reference.

```
     <content>
     <content-locator type="URI" value="http://www.associate.com/index.html">
         <content-identifier type="ISAN" value="006A-15FA-002B-C95F-A">
         <content-identifier type="ISWC" value="T-345246800-1">
     </content>
     <content>
         <content-digest type="MD5" value=" 1e07ab3591d25583eff5129293dc98d2">
     <content-identifier type="http://www.associate.com" value="b4ca02898e3c61:430">
     </content>
     <content>
         <content-locator type="URI" value="http://www.associate.com/logo.gif">
     </content>
```

After the content categorization provider receives the content categorization request, at first, it is needed to obtain the multiple content references by parsing the content request and determine which content references correspond to the same content according to the relation between the multiple content references and the content in the content categorization request, and then, the content can be categorized according to multiple content references corresponding to the same content.

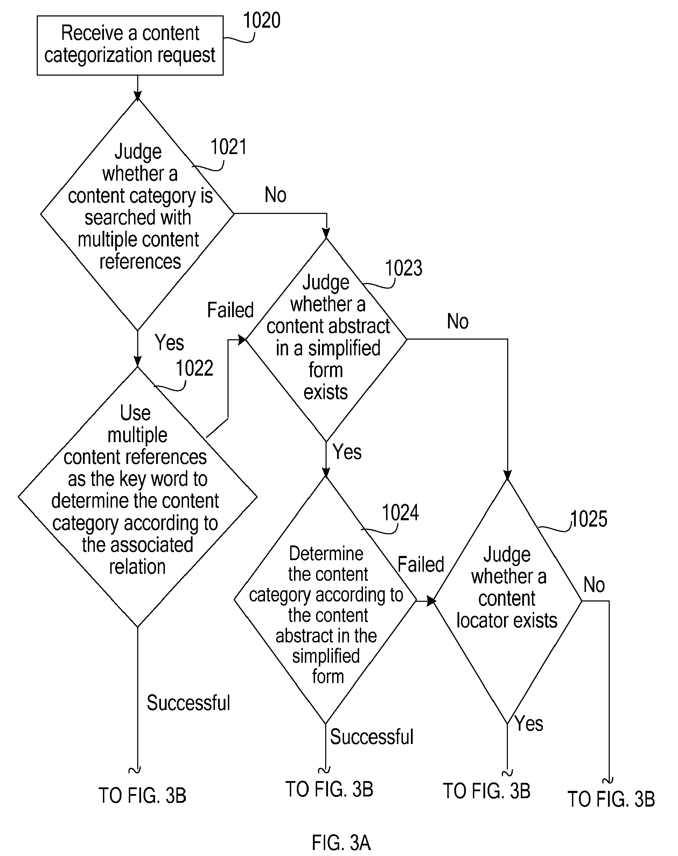

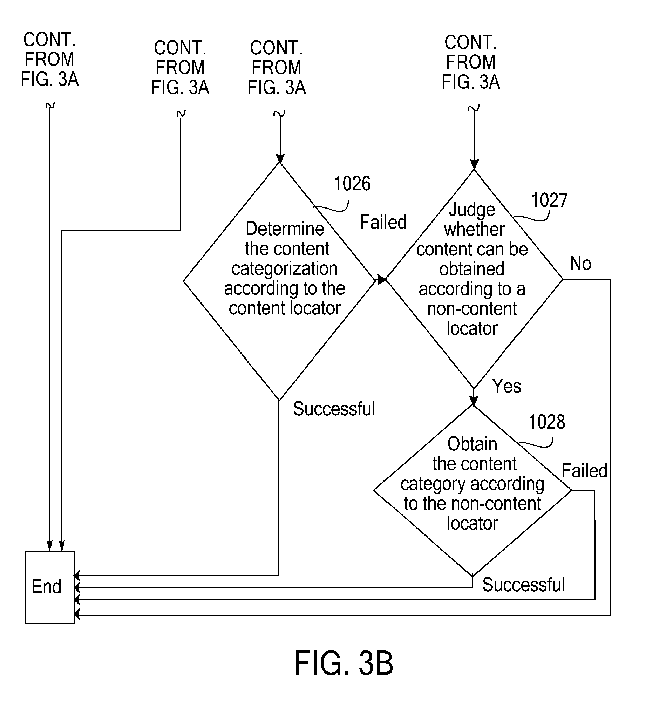

FIG. 3 is a flow chart of a method of a second embodiment of the present disclosure. As shown in FIG. 3, the method includes the following steps:
Step 1020: Receive a content categorization request sent by a content categorization requester. The content categorization request carries at least two content references.
Step 1021: A content categorization provider judges whether searching for content category according to the content references is supported. If yes, step 1022 is executed. Otherwise, step 1023 is executed. The judging whether the searching for the content category according to the at least two content references is supported includes: judging whether an associated relation between the content references for searching for the content category and the content category provides an association between content references and the content category in a type of the at least two content references. Specifically, the content categorization provider may need to judge whether it supports the type of parsed content reference (generally, the step that the content categorization provider judges whether it supports the parsed content references may also be executed when the content categorization request is parsed). For example, the content categorization provider needs to judge whether using a book number in an International Standard Book Number (ISBN) format as a format of the content references is supported. The content categorization provider may further need to judge whether the parsed content references are effective (generally, the step that the content categorization provider judges whether the parsed content references are effective may also be executed when the content categorization request is parsed). For example, the content categorization provider judges whether a Universal Resource Identifier (URI) complies with a URI format specification; mainly need to judge whether the associated relation between the content references for searching for the content category and the content category provides the association between the type of content references and the content category, that is, whether the content category can be searched according to the type of content reference that is used as a key word, for example: if the associated relation between the content references and the content category does not support an association between an ISBN and the content category, but supports an association between the URI and the content category, when the content categorization request carries the ISBN and the URI, the ISBN cannot be used as the key word for searching for the content category, and the URI can be used as the key word. The associated relation between the content references and the content category can be stored in a form of database in the content categorization provider, or in other data storages where the content categorization provider can obtain data. If one content reference of the multiple content references can be used as a key word for searching for the content category, it should be determined that the content category can be searched with the multiple content references in the content categorization request (a subsequent judgment is also similar, if one content reference complies with a judgment condition, a result of the judgment is considered true, which is not recited any more hereinafter.). Specifically, it can be determined that if one content reference can be used as a key word for searching for the content category, judgment of other content references is stopped, and step 1022 is executed. Also, judgment of all content references can be completed, and then step 1022 or 1023 is executed according to the judgment result.
Step 1022: Use the at least two content references as the key word to determine the content category according to the associated relation between the content references and the content category. If the content category is determined successfully (if the content categorization request instructs to obtain a category complying with one or more specific categorization schemes, whether the determining the content category is successful depends on determining the specified category of the categorization standard, and all category determinations in the embodiments of the present disclosure are performed based on this principle, which is not described any more hereinafter.), the procedure ends. If the content category is determined unsuccessfully, step 1023 is executed. Particularly, any content reference is used to determine the content category, that is, if with any content reference of the at least two content references as the key word, the searching for the content category according to the associated relation between the content references and the content category is successful, the procedure ends, and the searched content category is used as content categorization result; and the content category can also be searched according to all or partial content references capable of being used as the key word, and if the content categories are separately searched according to multiple content references, the searched content categories are processed, and results of the processing are used as the categorization result. If the content categorization request does not specify to obtain the category of a certain specific categorization standard, and the content categories do not conflict, the searched content categories are combined as the content categorization result; and if the specific categorization standard is not specified, and the content categories conflict, the results are combined according to preferable credit levels of category providers, or the conflicted categories are directly discarded. For example, a content category determined according to one first content reference is a first content category, a content category determined according to one second content reference is a second content category, the first content category or the second content category is used as the content categorization result, or the first content category and the second content category are combined as the content categorization result, or a content category complying with a categorization standard required in the content categorization request in the first content category and/or the second content category is returned according to the content categorization request. In summary, only when none of the content categories is obtained with the at least two content references as the key word, it is determined that using the at least two content references as the key word to determine the content category according to the associated relation between the content references and the content category fails (an execution step after the subsequent judgment is also similar, in which if multiple content references complying with the previous judgment condition exist, when they all fail, a failure is determined, which is not recited any more hereinafter.). For example, two content references ISBN and URI both of which can be used to search for the category are parsed according to one content categorization request. At first, the content category can be searched with one content reference, such as the ISBN, as the key word, and the content category is determined by searching for the relation between the content references and the content category. If the searching is successful, the procedure ends. If the searching is unsuccessful, with the URI as the key word, the content category is searched according to the relation between the content references and the content category. If the searching is successful, the procedure ends. If the searching is unsuccessful, step 1023 is executed.
Step 1023: Judge whether a content abstract in a simplified form is present in the at least two content references. If yes, step 1024 is executed. Otherwise, step 1025 is executed.
Step 1024: Identify and analyze the content abstract in the simplified form with an algorithm, so as to determine a content category. If the content category is determined successfully, the procedure ends. If the content category is determined unsuccessfully, step 1025 is executed.
Step 1025: Judge whether a content locator is present in the at least two content references. If yes, step 1026 is executed. Otherwise, step 1027 is executed.
Step 1026: Obtain a corresponding content according to the content locator, and the obtained content is identified and analyzed with an algorithm, so as to determine the content category. If the content category is determined successfully, the procedure ends. If the content category is determined unsuccessfully, step 1027 is executed.
Step 1027: Judge whether obtaining a content itself according to a content reference of a non-content locator in the at least two content references is supported. If yes, step 1028 is executed. Otherwise, the procedure ends. The judging whether the obtaining the content itself according to the content reference of the non-content locator in the at least two content references is supported includes: judging whether an information provider capable of providing the content itself according to the content references is capable of providing the content itself by the content references in a type of the at least two content references, and judging whether the content itself is obtained from the information provider. Specifically, it is needed to synthetically judge whether the content itself can be obtained according to the type of content reference of the non-content locator according to its own ability (for example, whether related information is present (where and in which manner to obtain the content itself, and such security authentication manners as needed user name and password), or it can be known where the needed information is obtained) of the content categorization provider, and ability (such as, which correspondences between the content references and the content itself are provided) of the information provider providing the content references and the content itself.
Step 1028: Obtain the content itself according to the content reference of the non-content locator, and identify and analyze the content itself with the algorithm, so as to determine the content category. If the determining the content category fails, the procedure ends. If multiple content references of the non-content locator exist, the content itself can be attempted to be obtained with each content reference. After the obtaining the content itself fails or the determining the content category fails, a next available content reference is attempted, the content itself can also be attempted to be obtained with multiple content references simultaneously, and it can be further decided which content reference is adopted to obtain the content itself according to historical experience of obtaining the content itself by the content categorization provider and a current available trust link.

A specific implementation procedure of steps 1020 to 1028 is an exemplary solution. Firstly, because when determining the content category, searching for the content category directly according to an associated relation between an existing content reference and the content category is the fastest manner. Secondly, the content category is determined according to the content abstract in the simplified form. Because the content abstract in the simplified form is small, the determining the content category by identifying and analyzing with the algorithm is affirmatively faster than the determining the content category according to the content itself. Thirdly, the content itself is obtained to determine the content category according to the content locator. Because both manners of the searching for the content category directly according to the associated relation between the existing content reference and the content category and the categorizing the content according to the content abstract in the simplified form are performed based on content reference information directly provided by the content categorization requester, while the obtaining the content according to the content locator needs additionally interaction and data transmission performed with a server corresponding to the content locator. Therefore, the time for obtaining the content category becomes longer. Further, relative to the both manners of determining the content category, because the content itself is larger than the content abstract in the simplified form and the content reference, difficulty and complexity of the determining the content category by identifying and analyzing with the algorithm are increased, which also causes the time for determining the content category to become longer. Eventually, the content category is determined according to the content reference of the non-content locator. Because the content categorization provider needs to first judge whether the obtaining the content itself with this type of non-content locator is supported, even though it is supported, it is also not necessary to be capable of obtaining the content itself, so a priority level of an operation of the determining the content category according to the content reference of the non-content locator is lower. It should be noted that, not each step in the specific implementation procedure of steps 1020 to 1028 must be executed. For example, for at least two content references obtained by parsing the content request according to the content categorization request, if the content category can be searched by directly searching for the relation between the content references and the content category with one of the content references, subsequent steps 1023 to 1028 all do not need to be executed.

Further, if the content categorization provider determines the content category successfully, the content category is returned to the content categorization provider. If the determining the content category by the content categorization provider fails, a message indicating that the determining the content category fails is returned to the content categorization provider. A possible failure reason can be illustrated in the message.

The embodiment can be specifically applied to a content categorization unit of CBCS, which is configured to perform content categorization on the received content categorization request carrying multiple content references.

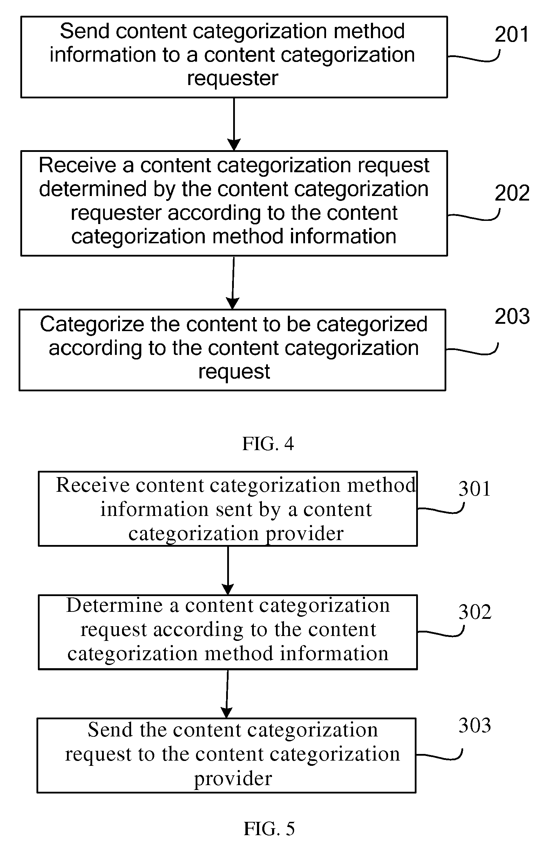

FIG. 4 is a flow chart of a method of a third embodiment of the present disclosure. As shown in FIG. 4, the method includes the following steps:
Step 201: Send content categorization method information to a content categorization requester.
Step 202: Receive a content categorization request determined by the content categorization requester according to the content categorization method information.
Step 203: Categorize the content to be categorized according to the content categorization request.

If the content categorization request carries content categorization method requirement information, the content to be categorized is categorized according to the content categorization method requirement information. If the content categorization request does not carry content categorization method requirement information, and the content categorization method information includes a content categorization method default value, the content to be categorized is categorized according to the content categorization method default value.

The content categorization method information includes one or more types of the following information: integral content categorization method information; integral content categorization method sequence information; content reference applicable content categorization method information; and content reference applicable content categorization method sequence information. The content reference applicable content categorization method is necessarily a part or all of an integral content categorization method, and the content reference applicable content categorization method sequence information also complies with the integral sequence information. The content categorization method information can be borne in a message in a procedure of content categorization ability negotiation between the content categorization provider and the content categorization requester, and specifically should be borne in a message sent to the content categorization requester by the content categorization provider.

The content categorization method requirement information includes one or more types of the following information: integral content categorization method requirement information; integral content categorization method sequence requirement information; content reference applicable content categorization method requirement information; and content reference applicable content categorization method sequence requirement information. A content categorization method requirement can require a content categorization method and a sequence as a whole. At this time, when being used to categorize, all content forms should satisfy the content categorization method requirement and sequence requirement. Also, requirements can be raised on the categorization method and sequence in each content form individually. Specifically this content categorization method requirement information should be made according to and in conformity to the received content categorization method information sent by the content categorization provider, and cannot violate and go beyond the received content categorization method information. For example, if the content categorization method information sent by content categorization provider only provides the integral content categorization method information and the integral sequence information, the content categorization method requirement information can only raise requirements on the integral categorization method and sequence within a range of the foregoing information.

After categorizing the content to be categorized, the method further includes: sending a content categorization result to the content categorization requester.

In the third embodiment of the present disclosure, the content categorization provider sends the content categorization method information to the content categorization requester. In this way, the content categorization requester can clearly know a method in which the content categorization provider categorizes the content, which is helpful for the content categorization requester to determine a manner in which the content categorization is requested.

FIG. 5 is a flow chart of a method for requesting content categorization according to a fourth embodiment of the present disclosure. The method includes the following steps:
Step 301: Receive content categorization method information sent by a content categorization provider.
Step 302: Determine a content categorization request according to the content categorization method information.
Step 303: Send the content categorization request to the content categorization provider.

The content categorization request can carry content categorization method requirement information.

At the same time of the determining the content categorization request according to the content categorization method information, the content categorization request can be further determined according to one or more types of the following information: characters of content to be categorized; abilities of a content categorization requester; and a received content categorization result.

The content categorization method information includes one or more types of the following information: integral content categorization method information; integral content categorization method sequence information; content reference applicable content categorization method information; and content reference applicable content categorization method sequence information. The content reference applicable content categorization method is necessarily a part or all of an integral content categorization method, and the content reference applicable content categorization method sequence information also complies with integral sequence information. The content categorization method information can be borne in a message in a procedure of content categorization ability negotiation between the content categorization provider and the content categorization requester, and specifically should be borne in a message sent to the content categorization requester by the content categorization provider.

The content categorization method requirement information includes one or more types of the following information: integral content categorization method requirement information; integral content categorization method sequence requirement information; content reference applicable content categorization method requirement information; and content reference applicable content categorization method sequence requirement information. A content categorization method requirement can require a content categorization method and a sequence as a whole, both of which should be conformed to when the content categorization provider categorizes all content forms. Also, a requirement can be raised on the categorization method and sequence in each content form individually. Specifically the content categorization method requirement information should be made according to and in conformity to the content categorization method information sent by the content categorization provider, and cannot violate and go beyond the content categorization method information. For example, if the content categorization provider only provides the integral content categorization method information and the integral sequence information, when determining the content categorization method requirement information, the content categorization requester can only raise requirements on the integral categorization method and the sequence within a range of the information provided by the content categorization provider.

After the content categorization requester sends the content categorization request to the content categorization provider according to the content categorization method information, the method further includes: receiving the content categorization result returned by the content categorization provider.

In the fourth embodiment of the present disclosure, the content categorization requester determines the content categorization request according to the content categorization method information. The content categorization request can carry the content categorization method requirement information. A manner in which the content is categorized according to the content categorization request, particularly according to the content categorization method requirement information in the content categorization request, is a manner suitable to processing ability of the content categorization requester itself and suitable to a specific content. In this way, the efficiency of obtaining the content categorization can be improved.

Hereinafter, a content categorization method implementation process according to the present disclosure is illustrated in detail.

Before the content categorization requester requests the content categorization from the content categorization provider, the both parties negotiate. In the prior art, in a negotiation procedure, the content categorization provider returns only such information as content type, content reference type and related encoding or language supported by the content categorization provider to the content categorization requester, but the information is not concerned with a manner which the content categorization provider adopts to categorize a content for a certain content reference and the content itself, so that the content categorization requester cannot fully know categorization ability of the content categorization provider. In the embodiment of the present disclosure, in a procedure for a negotiation between the content categorization provider and the content categorization requester, content categorization method information for different content references and the content itself is borne in a message of the negotiation procedure. In this way, when receiving the content categorization method information, the content categorization requester can fully understand how the content categorization provider categorizes the content, so as to raise requirements on the categorization method.

Two types of description manner of the content categorization method information sent to the content categorization requester by the content categorization provider in the content categorization method according to the embodiment of the present disclosure are described in the following. In a first type of manner, for different types of content, their applicable method and sequence for determining the category and a default method are illustrated separately. In a second type of manner, their supported procedure for determining the category is uniformly illustrated, and then content forms corresponding to various methods are illustrated. Description of the both manners is substantially the same. The first type of description manner is shown in the following message.

```
     <content-support>
          <content-itself method=categorize>
          <content-identifier-type=URI method=retrieve, obtain, retrieve+obtain
 default=retrieve+obtain>
     </content-support>
     <categorization-method value=retrieve, categorize, obtain order=sequence
 support-combination=TRUE>
```

It can be seen from the foregoing message, content forms supported by the content categorization provider are the content itself and URI. A method for determining the content category according to the content itself is determining the content category by identifying and analyzing directly with an algorithm (hereinafter abbreviated as an algorithm analysis manner). A method for determining the content category according to the URI can be searching and obtaining the content category directly according to an associated relation between the content reference and the content category (hereinafter abbreviated as a search manner). Also, the content itself can be obtained at first, and then an algorithm analysis manner is applied to the content itself to determine the content category (hereinafter abbreviated as an obtaining content itself manner). Further the content category can be searched at first according to the associated relation between the content reference and the content category, and if the searching fails, the content category is determined through the obtaining content itself manner (hereinafter abbreviated as a first searching and then obtaining manner). A default manner for performing content categorization on the content reference URI is the first searching and then obtaining manner. Manners for integrally determining the content category supported by the content categorization provider is: the search manner, the algorithm analysis manner, and the obtaining content itself manner. The manners are executed in sequence, that is, a sequence of each manner for integrally determining the content category is: at first adopting the search manner, then adopting the algorithm analysis manner, and eventually adopting the obtaining content itself manner, and meanwhile, manner combinations according to the sequence (for example, the URI supports the first searching and then obtaining manner, which complies with an integral sequence but skips the algorithm analysis manner) are also supported.

The following message is a second type of description manner of the content categorization method information sent to the content categorization requester by the content categorization provider in the content categorization method according to the embodiment of the present disclosure.

```
<content-support value=content-itself, URI>
     <categorization-method order=sequence>
          <retrieve type=URI >
          <categorize type=content-itself>
          <obtain type=URI>
     </categorization-method>
```

It can be seen from the foregoing message that, the content forms supported by the content categorization provider are the content itself and the URI. An integral method for categorizing content supported by the content categorization provider is: the search manner, the algorithm analysis manner, and the obtaining content itself manner. The manners are executed in sequence. For the search manner, an applicable content form is the URI. For the algorithm analysis manner, an applicable content form is the content itself. For the obtaining content itself manner, an applicable content form is the URI. Due to a sequence relation of the categorization methods, a default method for the URI is a first searching and then obtaining content itself manner.

It can be seen from the foregoing description, compared with the prior art, in the embodiment of the present disclosure, a content categorization message sent to the content categorization requester by the content categorization provider carries one or more types of such information as integral content categorization method information, integral content categorization method sequence information, each content reference applicable content categorization method information, each content reference applicable content categorization method sequence information supported by the content categorization provider. In this way, the content categorization requester can fully know a manner in which the content categorization provider categorizes the content.

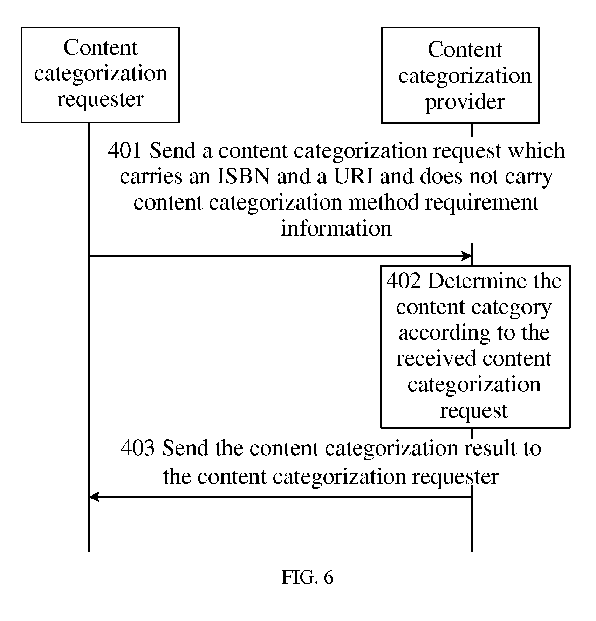

FIG. 6 is a flow chart of a method of a fifth embodiment of the present disclosure. As shown in FIG. 6, the fifth embodiment mainly introduces how a content categorization requester requests a content category of one document, which includes the following.

At first, a content categorization provider negotiates with a content categorization requester, and the content categorization provider sends content categorization method information to the content categorization requester. The information is specifically in the following message:

```
     <content-support>
          <content type=text/plain, image/jpeg, video/mpeg method=categorize>
          <content-locator type=URI method=retrieve, obtain, retrieve-then-obtain,
 default=retrieve-then-obtain>
          <content-identifier type=ISBN method=retrieve>
          <content-digest type=reduced-form content-type=image/jpeg, video/mpeg
 method=categorize>
     </content-support>
     <categorization-method value=retrieve, categorize, obtain order=sequence
 support-combination=TRUE >
```

It can be seen from the foregoing message that, content forms supported by the content categorization provider include a content itself, a URI, an ISBN, and a content abstract in a simplified form. Types of the content itself include letter, Joint Photographic Experts Group (JPEG) picture, and Moving Pictures Experts Group (MPEG) video. A categorization manner corresponding to the content itself is an algorithm analysis manner for categorizing directly according to the content. A categorization manner corresponding to the URI includes a search manner, an obtaining content itself manner, and a first searching and then obtaining manner, and a default manner thereof is the first searching and then obtaining manner. A categorization manner corresponding to the ISBN is the search manner. A categorization manner corresponding to the content abstract in the simplified form is an algorithm analysis manner for directly categorizing, and types of the content itself corresponding to the content abstract in the simplified form is the JPEG picture and the MPEG video. An integral categorization manner supported by the content categorization provider includes the search manner, the algorithm analysis manner, and the obtaining content itself manner, the manners are executed in sequence, and manner combinations according to the sequence (such as the first searching and then obtaining manner corresponding to the URI) are supported.

A negotiation step between the content categorization provider and the content categorization requester does not need to be performed at each time of requesting a content category, and generally is performed once before the content categorization requester requests the content category.

After the negotiation between the content categorization requester and the content categorization provider is completed, the content categorization requester request the content categorization provider to categorize the content, which includes the following steps.

In step 401, after receiving a message (such as a content categorization method message) in the content categorization negotiation procedure, the content categorization requester determines a content categorization request according to the content categorization method information of the content categorization provider carried in the content categorization method message. The content categorization request determined here not only includes content information for requesting the category, but also includes a manner and strategy of requesting categorization. For example, at first the category is requested with the URI, and if failed, then the category is requested with the content abstract in the simplified form. The content categorization provider can further determine the content categorization request according to one or more types of the following information simultaneously: characters of content to be categorized, processing ability of the content categorization requester itself, and a received content categorization result. The content categorization request sent to the content categorization provider can further carry content categorization method requirement information indicating that the content categorization provider performs categorization in term of the preferable categorization manner. As for the document content, known content references are the ISBN and the URI. Because the content categorization requester itself does not support generation of an automatic text abstract of a document type content, the content categorization requester performs a synthetic analysis, and a determined preferable categorization manner is: obtaining the category directly with combination of the ISBN and the URI. As for a case that the URI does not carry the content categorization method requirement information, a default processing manner of first searching and then obtaining content itself provided by the content categorization provider is defaulted and adopted, and the ISBN does not carry the content categorization method requirement information neither. Because only one categorization manner is present, the default processing manner provided by the content categorization provider is adopted.

In step 402, the content categorization provider categorizes content according to the received content categorization request. Because the content forms provided by the content categorization requester are the ISBN and the URI, and the content categorization method requirement information does not exist, the content categorization provider at first searches the content category based on the ISBN and the URI. When the searching fails, the content itself is retrieved with the URI and categorized in real time.

In step 403, the content categorization provider sends the content categorization result to the content categorization requester. It is possible that even though the step 402 is performed, the content categorization provider still cannot acquire the content category, so the content categorization result sent to the content categorization requester by the content categorization provider includes two types, in which one type is a determined content category, and the other type is a content categorization failure message carrying a possible failure reason.

A sixth embodiment of the present disclosure mainly illustrates how to acquire a content category of a video content.

After receiving a content categorization ability message, a content categorization requester determines a preferable categorization manner according to content categorization method information (see the content categorization method information of the fifth embodiment) of a content categorization provider, processing ability of the content categorization requester itself, characters of content to be categorized, and a received content categorization result in the message, and a content categorization request sent to the content categorization provider carries content categorization method requirement information indicating that the content categorization provider performs categorization based on the preferable categorization manner. As for the video content, the content itself and a URI are known. The content categorization requester performs a synthetic analysis, and a determined preferable manner of obtaining the content categorization of the video content is as follows. At first, the content category is searched by adopting a search manner with the URI as a content reference. If the searching for the content category fails, the content categorization requester sends a content abstract in a simplified form and the URI to the content categorization provider (indicating to only adopt an obtaining content itself manner). Because a procedure for categorizing content by the content categorization provider is searching at first (which only supports querying according to the URI and an ISBN, see a content categorization method message sent to the content categorization requester by the content categorization provider), if the searching for the content category fails, categorization is performed according to the content itself (which only supports content categorization according to the content abstract in the simplified form of IMAGE/JPEG, VIDEO/MPEG and the content itself of an IMAGE/JPEG type), and if the content category still cannot be obtained, the content itself is obtained according to the URI and the categorization is performed according to the content itself. As for the content in a video (VIDEO/MPEG) type, a content reference capable of being searched with the search manner is only the URI, those capable of being directly categorized with an algorithm analysis manner are the content itself and the content abstract in the simplified form, and a content reference capable of obtaining the content itself is only the URI. If a manner that after obtaining the content itself through the URI, the content category is obtained according to the content itself is adopted, because the content itself is very large, calculation resources are consumed, and time for obtaining the content category is prolonged. In synthetic consideration of these factors, the preferable manner of obtaining the content categorization of the video content can be derived.

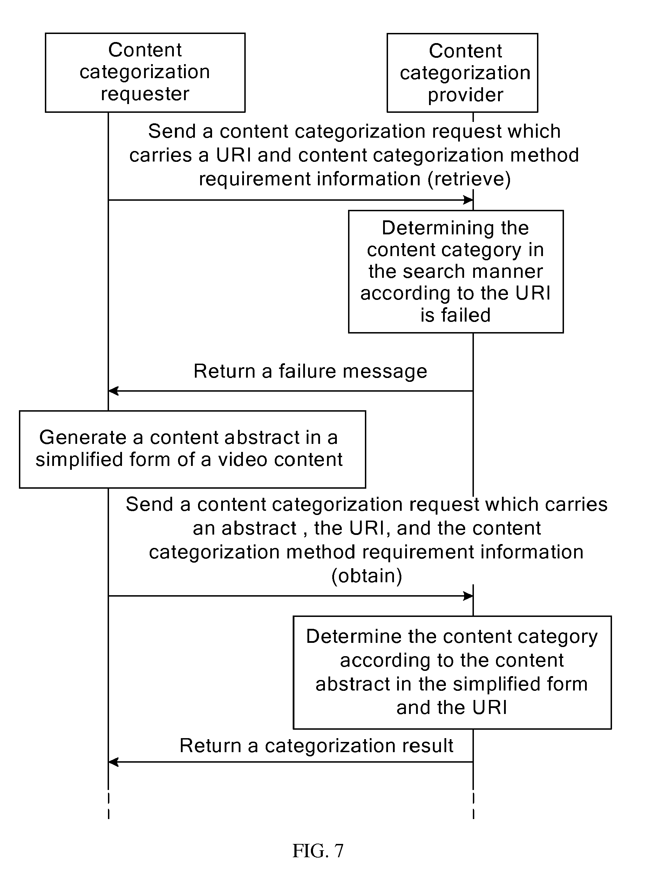

FIG. 7 is a flow chart of a method of a sixth embodiment of the present disclosure. As shown in FIG. 7, the content categorization requester sends the content categorization request to the content categorization provider with the URI as the content reference, which carries the content categorization method requirement information indicating to obtain the content category through the search manner according to the URI. After the content categorization provider receives the content categorization request, if the obtaining the content category through the search manner according to the URI fails, a failure message is returned to the content categorization provider. After receiving the failure message, the content categorization requester generates the content abstract in the simplified form of the video according to the failure result, then sends the content categorization request to the content categorization provider with the content abstract in the simplified form and the URI as the content references, and carries the content categorization method requirement information, indicating that a manner of obtaining the content category according to the URI is a manner in which the content itself is obtained according to the URI and then the content is categorized according to the obtaining of the content itself. In addition to according to the failure result, the content categorization requester may also decide a next action of the content categorization request according to content categorization method information, characters of content to be categorized (such as type and size of the video), and ability of the content categorization requester itself (such as supporting the generation of the type of video abstract, and having sufficient processing resources), and may also have made an integral strategy decision according to the information when requesting the category of the video at the first time. It is only needed to decide the action of the content categorization request according to the received failure result on the basis of the strategy decision. The content categorization provider determines the content category according to the content categorization request, particularly content categorization method requirement information in the content categorization request, and returns a categorization result.

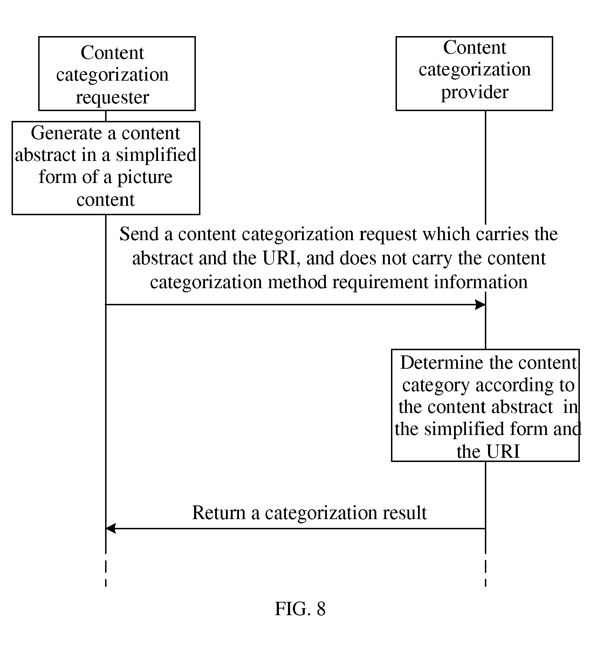

A seventh embodiment of the present disclosure mainly illustrates how to acquire a content categorization of a picture content. According to content categorization method information (see the content categorization method information of the fourth embodiment), abilities of a content categorization requester, and characters of content to be categorized in a content categorization ability message of a content categorization provider, the content categorization requester determines that a preferable manner of obtaining a content categorization for the picture content is as follows. Because calculation of a thumbnail of the picture content is very easy, a content abstract in a simplified form (thumbnail) can be directly generated at first, and then a URI and the thumbnail are provided simultaneously to obtain a content category, both of which do not carry content categorization method requirement information. FIG. 8 is a flow chart of a method of the seventh embodiment of the present disclosure. As shown in FIG. 8, at first, the content categorization requester generates the content abstract in the simplified form of the picture, and then sends the content categorization request to the content categorization provider with the content abstract in the simplified form and the URI as the content references. After receiving the content categorization request, the content categorization provider first searches the content category according to the URI. If the searching fails, the content category is determined according to the thumbnail. If the content category still cannot be obtained, the content itself is obtained according to the URI to determine the content category. Eventually, a categorization result is returned.

If the following content is added to the content categorization method information provided to the content categorization requester by the content categorization provider,

```
     <content-support>
          .....
          <content-digest type=MD5 content-type=video/mpeg method=retrieve, obtain,
 retrieve and obtain default=retrieve then obtain>
     </content-support>
```

it indicates that the content categorization requester further supports categorizing content according to an MD5 abstract of MPEG video. As for a content categorization requester supporting calculation of the MD5 abstract, if a content category of one video content is requested (characters of the video content are different from those of the video content in the sixth embodiment), the URI and the content itself of the video content are known. Although the MD5 abstract of the video can be generated, because the video the content itself is very large, the generation of MD5 also needs to consume time. If the content category can be acquired directly through the search manner according to the URI, it is not needed to generate the MD5 abstract. According to the content categorization method information of the content categorization provider, processing ability of the content categorization requester itself, and characters of content to be categorized, the content categorization requester determines that a preferable manner of obtaining the content category of the video content is as follows. At first, the content category is obtained with the search manner according to the URI, and the content categorization request carries the content categorization method requirement information only using the search manner. If searching for the content category by the content categorization provider fails, the content categorization provider generates the MD5 abstract and the content abstract in the simplified form, resends the content categorization request to the content categorization provider with the MD5 abstract, the content of the simplified form, and the URI as the content references, in which the content categorization request carries the content categorization method requirement information, indicating that a manner in which the content categorization provider obtains the content categorization according to the URI is the obtaining content itself manner. At this time, after receiving the content categorization request carrying the content categorization method requirement information, the content categorization provider executes the following procedure according to its own categorization procedure and the content and the content categorization method requirement information provided by the content categorization requester. At first, the content category is obtained with the search manner according to the MD5 abstract. If the obtaining the content category fails, the algorithm analysis manner is adopted for the content abstract in the simplified form. If the content category still cannot be determined, the obtaining content itself manner is adopted according to the URI and/or MD5 abstract to determine the content category. In the embodiment, if the content category is obtained in the search manner with the MD5 abstract and the URI as the content references at first, the content categorization requester needs to generate the MD5 at first. In this way, more time is consumed, and more resources are occupied.

For a video with a smaller content, the URI and the content itself of the video are known. Because the content itself is smaller, and the generation of the MD5 abstract does not consume very long time, but it is not necessary to calculate the content abstract in the simplified form (because the video itself is very small), a preferable manner determined for the video content according to the content categorization method information of the content categorization provider, processing ability of the content categorization requester itself, and characters of content to be categorized in which the content categorization is obtained is as follows. At first, the MD5 abstract is generated, and the content category is requested with the URI and the MD5 abstract as the content reference simultaneously. The request does not carry the content categorization method requirement information, that is, the content categorization provider is defaulted to adopt its own manner to perform categorization. After receiving a content request of the content categorization requester, the content categorization provider according to its own categorization manner, obtains the content category with the search manner according to the URI and/or MD5 abstract at first. If the searching for the content category fails, the content itself is obtained according to the URI and/or MD5 abstract, and then the content category is determined according to the content itself.

The method of the embodiments of the present disclosure can obtain a content category with multiple content references. Furthermore, the information about the categorization method of the content categorization provider is carried in a message sent to the content categorization requester by the content categorization provider, and the content categorization request sent to the content categorization provider by the content categorization requester carries the content categorization method requirement information, so that the content categorization provider can fully know categorizing ability of the content categorization provider. Furthermore, the content categorization requester can determine a preferable manner of obtaining the content categorization by analyzing one or more types of such information as content categorization ability of the content categorization provider, and further simultaneously analyzing characters of content to be categorized, abilities of the content categorization requester, and a received content categorization result, and further indicate a categorization method which should be used by the content categorization provider through the content categorization method requirement information, so that the content categorization requester can high efficiently and quickly obtain the content category in a method which is effective, suitable to content characters and ability of the requester, and utilizes a known categorization result.

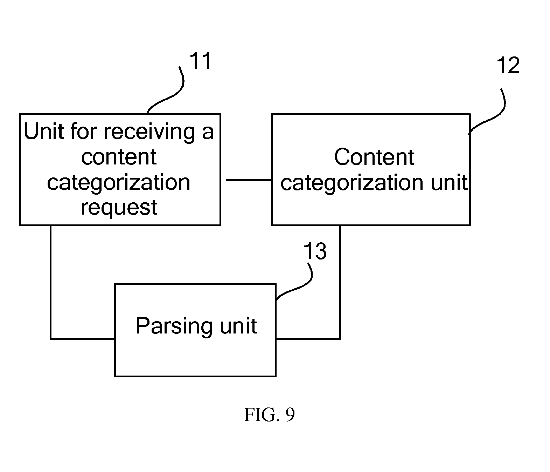

FIG. 9 is a schematic diagram of a device of a first embodiment of the present disclosure.

As shown in FIG. 9, the device includes a unit for receiving a content categorization request 11 and a content categorization unit 12. The unit for receiving a content categorization request 11 is configured to receive a content categorization request sent by a content categorization requester. The content categorization request carries a first content reference and a second content reference. The content categorization unit 12 is configured to determine a content category according to the first content reference and/or the second content reference. The device can further include a parsing unit 13. The parsing unit 13 is configured to parse a content reference in the content categorization request, and determine a corresponding relation between a content reference and a content according to information of the corresponding relation between the content reference and the content carried in the content categorization request received by the unit for receiving a content categorization request.

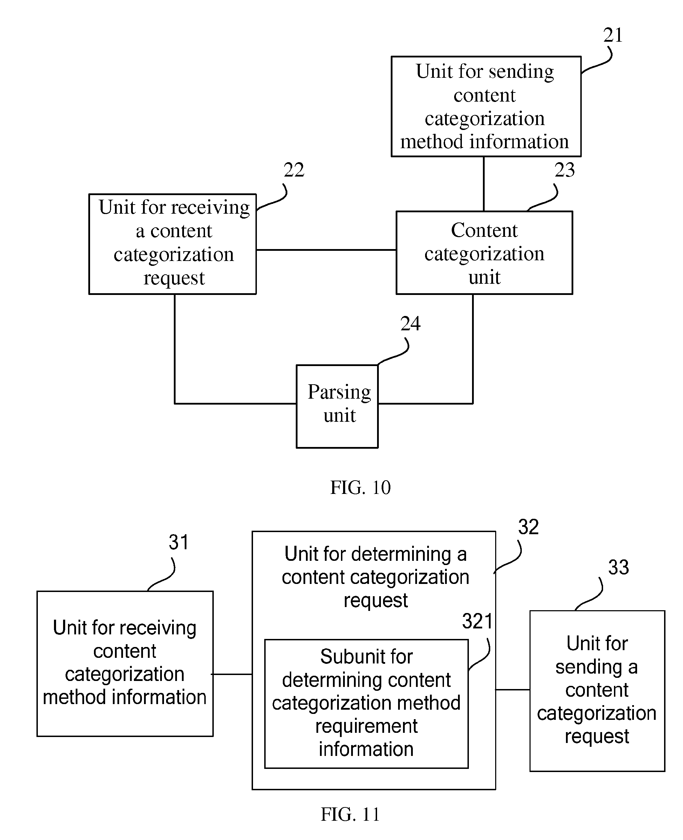

FIG. 10 is a schematic diagram of a device of a second embodiment of the present disclosure. As shown in FIG. 10, the device includes a unit for sending content categorization method information 21, a unit for receiving a content categorization request 22, and a content categorization unit 23. The unit for sending content categorization method information 21 is configured to send a content categorization method message to a content categorization requester. The unit for receiving a content categorization request 22 is configured to receive a content categorization request determined according to the content categorization method information sent by the content categorization requester. The content categorization unit 23 is configured to determine a content category according to the content categorization request. The device may further include a parsing unit 24. The parsing unit 24 is configured to parse multiple content references in the content categorization request, and determine which content references correspond to the same content according to information of the corresponding relation between the content reference and the content carried in the content categorization request received by the unit for receiving a content categorization request.

FIG. 11 is a schematic diagram of a device for requesting content categorization according to an embodiment of the present disclosure. As shown in FIG. 11, the device includes a unit for receiving content categorization method information 31, a unit for determining a content categorization request 32, and a content categorization request sending unit 33. The unit for receiving content categorization method information 31 is configured to receive the content categorization method information sent by a content categorization provider. The unit for determining a content categorization request 32 is configured to determine the content categorization request according to the content categorization method information. The content categorization request sending unit 33 is configured to send the content categorization request determined by the unit for determining a content categorization request to the content categorization provider. The unit for determining a content categorization request can further include a subunit for determining content categorization method requirement information 321. The subunit for determining content categorization method requirement information 321 is configured to determine content categorization method requirement information according to content categorization method information received by the unit for receiving content categorization method information 31.

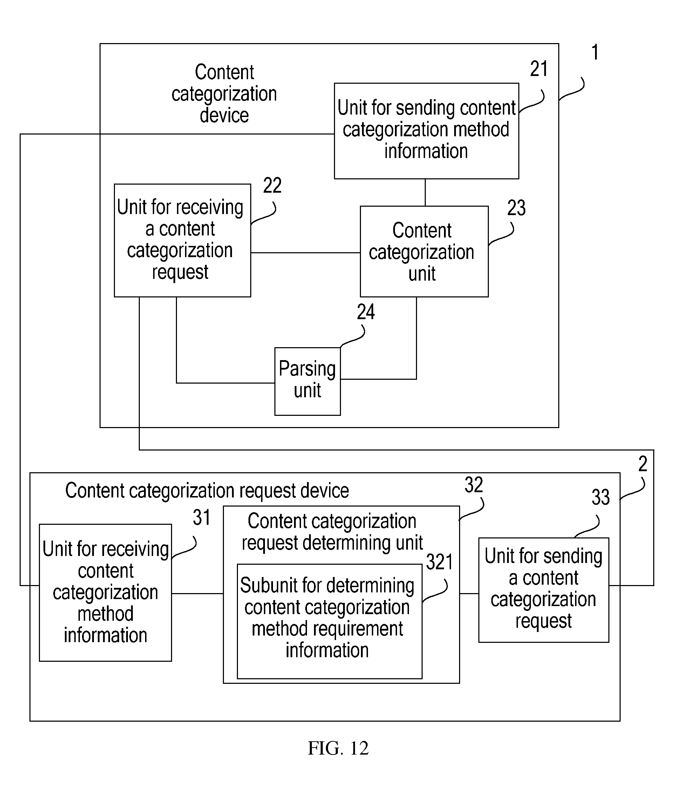

FIG. 12 is a schematic diagram of a system of an embodiment of the present disclosure.

As shown in FIG. 12, the system includes a device for categorizing content 1 and a device for requesting content categorization 2.

The device for categorizing content includes a unit for sending content categorization method information 21, a unit for receiving a content categorization request 22, and a content categorization unit 23. The device for requesting content categorization 2 includes a unit for receiving content categorization method information 31, a unit for determining a content categorization request 32, and a content categorization request sending unit 33. The device for categorizing content 1 can further include a parsing unit 24, and the unit for determining a content categorization request 32 in the device for requesting content categorization 2 can further include a subunit for determining content categorization method requirement information 321.

Persons of ordinary skill in the art may understand that all or part of the steps of the method according to the embodiments of the present disclosure may be implemented by a program instructing relevant hardware. The program may be stored in a computer readable storage medium. When the program runs, the steps of the method according to the embodiments of the present disclosure are performed. The storage medium may be any medium that is capable of storing program codes, such as a Read-Only Memory (ROM), a Random Access Memory (RAM), a magnetic disk, or a Compact Disk Read-Only Memory (CD-ROM).

It should be noted that the above embodiments are merely provided for elaborating the technical solutions of the present disclosure, but not intended to limit the present disclosure. Although the present disclosure has been described in detail with reference to the foregoing embodiments, it is apparent that person having ordinary skill in the art may make modifications to the technical solutions described in the above embodiments, or may make some equivalent replacements to some of the technical properties without making the nature of the corresponding technical solutions depart from the scope of the various embodiments of the disclosure.

## Claims

1. A method for categorizing content, comprising:
receiving a content categorization request, wherein the content categorization request carries a first content reference and a second content reference; and
categorizing the content according to the first content reference and/or the second content reference.

2. The method of claim 1, wherein the method is based on a framework of Categorization Based Content Screening, (CBCS), of an Open Mobile Alliance.

3. The method of claim 1, wherein the content categorization request further carries a third content reference, and the method for categorizing content further comprises: determining a first content category according to the first content reference and the second content reference, determining a second content category according to the third content reference, and using the first content category as a categorization result of the content.

4. The method of claim 1, further comprising: determining a first content category according to the first content reference, determining a second content category according to the second content reference;
using the first content category or the second content category as a categorization result of the content, or combining the first content category and the second content category as a categorization result of the content, or returning a content category complying with a categorization standard required in the content categorization request in the first content category and/or the second content category according to the content categorization request.

5. The method of claim 1, wherein the content categorization request carries information that indicates a corresponding relation between a content reference and a content.

6. The method of claim 5, wherein after the receiving the content categorization request, the method further comprises:
parsing the content categorization request to obtain a content reference in the content categorization request, and determining the corresponding relation between the content reference and the content according to the information for demonstrating the corresponding relation between the content reference and the content in the content categorization request.

7. The method of claim 1 or 6, wherein the categorizing the content according to the first content reference and/or the second content reference comprises:
judging whether searching for a content category according to the first content reference and/or the second content reference is supported, and if the searching for the content category according to the first content reference and/or the second content reference is supported, using the first content reference and/or the second content reference as a key word to determine a content category according to an associated relation between a content reference and the content category.

8. The method of claim 7, wherein the judging whether searching for the content category according to the first content reference and/or the second content reference is supported comprises:
judging whether the associated relation between the content reference for searching for the content category and the content category is capable of providing an association between the content reference and the content category in a type of at least one of the first content reference type and the second content reference.

9. The method of claim 8, wherein the using the first content reference and/or the second content reference as the key word to determine the content category according to the associated relation between the content reference and the content category comprises:
using the first content reference and/or the second content reference as the key word to determine the content category according to the associated relation between the content reference and the content category.

10. The method of claim 9, further comprising:
if the searching for the content category according to the first content reference and/or the second content reference is not supported, or the using the first content reference and/or the second content reference as the key word to determine the content category according to the associated relation between the content reference and the content category fails, judging whether the first content reference and/or the second content reference comprises a content abstract in a simplified form, and if the first content reference and/or the second content reference comprises the content abstract in the simplified form, performing categorization and determining a content category according to the content abstract in the simplified form.

11. The method of claim 10, further comprising:
if the first content reference and/or the second content reference does not comprise the content abstract in the simplified form, or the determining the content category according to the content abstract in the simplified form fails, judging whether the first content reference and/or the second content reference comprises a content locator, and if the first content reference and/or the second content reference comprises the content locator, obtaining a content itself and performing categorization according to the content locator, and determining the content category.

12. The method of claim 11, further comprising:
if the first content reference and/or the second content reference does not comprise the content locator, or the determining the content category according to the content locator fails, judging whether obtaining the content itself according to a content reference of a non-content locator in the first content reference and/or the second content reference is supported, and if the obtaining the content itself according to the content reference of the non-content locator in the first content reference and/or the second content reference is supported, obtaining the content itself and performing categorization according to the content reference of the non-content locator, and determining the content category, and if the obtaining the content itself according to the content reference of the non-content locator in the first content reference and/or the second content reference is not supported, failing to categorize the content.

13. The method of claim 12, wherein the judging whether obtaining the content itself according to the content reference of the non-content locator in the first content reference and/or the second content reference is supported comprises:
judging whether an information provider capable of providing the content itself according to the content reference is capable of providing the content itself by the content reference in a type of the first content reference and/or the second content reference, and judging whether the content itself can be obtained from the information provider.

14. A method for categorizing content, comprising:
sending content categorization method information to a content categorization requester;
receiving a content categorization request determined by the content categorization requester according to the content categorization method information; and
categorizing a content to be categorized according to the content categorization request.

15. The method of claim 14, wherein the content categorization request carries content categorization method requirement information; and
the categorizing the content to be categorized according to the content categorization request comprises: categorizing the content to be categorized according to the content categorization method requirement information in the content categorization request.

16. The method of claim 14, wherein the content categorization method information comprises a content categorization method default value, the content categorization request does not carry the content categorization method requirement information, and the content to be categorized is categorized according to the content categorization method default value.

17. The method of claim 14 or 15, wherein the content categorization method information comprises one or more types of the following information:
integral content categorization method information;
integral content categorization method sequence information;
content reference applicable content categorization method information; and
content reference applicable content categorization method sequence information.

18. The method of claim 15, wherein the content categorization method requirement information is determined according to the content categorization method information.

19. A method for requesting content categorization, comprising:
receiving content categorization method information sent by a content categorization provider;
determining a content categorization request according to the content categorization method information; and
sending the content categorization request to the content categorization provider.

20. The method for requesting content categorization according to claim 19, wherein the content categorization request carries content categorization method requirement information.

21. The method for requesting content categorization according to claim 19, wherein at the same time of the determining the content categorization request according to the content categorization method information, the content categorization request is further determined according to one or more types of the following information:
characters of a content to be categorized;
abilities of a content categorization requester; and
a received content categorization result.

22. A device for categorizing content, comprising:
a unit for receiving a content categorization request, configured to receive a content categorization request sent by a content categorization requester, wherein the content categorization request carries a first content reference and a second content reference; and
a content categorization unit, configured to determine a content category according to the first content reference and/or the second content reference.

23. The device of claim 22, further comprising:
a parsing unit, configured to obtain a content reference in the content categorization request by parsing the content categorization request, and determine a corresponding relation between a content reference and a content according to information of the corresponding relation between the content reference and the content carried in the content categorization request received by the unit for receiving a content categorization request.

24. A device for categorizing content, comprising:
a unit for sending content categorization method information, configured to send content categorization method information to a content categorization requester;
a unit for receiving a content categorization request, configured to receive a content categorization request determined according to the content categorization method information sent by the content categorization requester; and
a content categorization unit, configured to determine a content category according to the content categorization request.

25. The device of claim 24, further comprising:
a parsing unit, configured to obtain a content reference in the content categorization request by parsing the content categorization request, and determine a corresponding relation between a content reference and a content according to information of the corresponding relation between the content reference and the content carried in the content categorization request received by the unit for receiving a content categorization request.

26. A device for requesting content categorization, comprising:
a unit for receiving content categorization method information, configured to receive content categorization method information sent by a content categorization provider;
a unit for determining a content categorization request, configured to determine a content categorization request according to the content categorization method information; and
a content categorization request sending unit, configured to send the content categorization request determined by the unit for determining a content categorization request to the content categorization provider.

27. The device for requesting content categorization according to claim 26, wherein the unit for determining a content categorization request further comprises:
a subunit for determining content categorization method requirement information, configured to determine content categorization method requirement information according to the content categorization method information received by the unit for receiving content categorization method information.

28. A system for categorizing content, comprising:
a device for categorizing content, comprising: a unit for sending content categorization method information, configured to send a content categorization method message to a content categorization requester; a unit for receiving a content categorization request, configured to receive a content categorization request determined according to the content categorization method information sent by the content categorization requester; and a content categorization unit, configured to determine a content category according to the content categorization request; and
a device for requesting content categorization, comprising: a unit for receiving content categorization method information, configured to receive the content categorization method information sent by a content categorization provider; a unit for determining a content categorization request, configured to determine the content categorization request according to the content categorization method information; and a content categorization request sending unit, configured to send the content categorization request determined by the unit for determining a content categorization request to the content categorization provider.
